Europäisches Patentamt

(19) European Patent Office    (11) Publication number: **0 258 196 B1**

Office européen des brevets

(12)    **EUROPEAN PATENT SPECIFICATION**

(45) Date of publication of the patent specification:    (51) Int. Cl.⁵: **D21C 11/04, C01D 1/20**
09.05.90

(21) Application number: 87850238.4

(22) Date of filing: 31.07.87

(54) A process for the preparation of sulphide-free alkali liquor.

(30) Priority: 14.08.86 SE 8603425
28.11.86 SE 8605120

(43) Date of publication of application:
02.03.88 Bulletin 88/9

(45) Publication of the grant of the patent:
09.05.90 Bulletin 90/19

(84) Designated Contracting States:
AT BE CH DE ES FR GB GR IT LI LU NL SE

(56) References cited:
DE-A- 2 533 794
NO-C- 101 658
NO-C- 107 996
US-A- 2 054 727

(73) Proprietor: ALBY KEMI AB, S-774 00 Avesta(SE)

(72) Inventor: Hedblom, Mats-Olov, Brunnsvägen 9,
S-774 00 Avesta(SE)
Inventor: Bergström, Hakan,
Mansbovägen 3 Mansbogard, S-774 00 Avesta(SE)
Inventor: Ulmgren, Per, Tallbergsvägen 1,
S-181 64 Lindingö(SE)

(74) Representative: Perneborg, Henry T., Allied Attorneys
Chemical AB P.O. Box 27097, S-102 51 Stockholm(SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the preparation of sulphide-free alkali liquor from sulphide-containing liquors.

The expression "sulphide" shall in this context, if not other-wise stated, be interpreted in its broadest sense and comprises $HS^-$, $S^{2-}$ as well as $H_2S$. By "alkali liquor" in this context is meant an aqueous solution of alkali hydroxide, particularly sodium hydroxide and potassium hydroxide.

The preparation of pure sodium and potassium hydroxides has traditionally been achieved by electrolysis of the corresponding chlorides. The disadvantage of this process is that the hydroxides only can be prepared simultaneously with equimolar amounts of chlorine. Thus, this presupposes that chlorine as well as liquor can be disposed of at the same time which is not the case on certain markets. The demand for one of the chemicals also strongly varies with the state of the market and great price fluctuations may occur.

The pulp mills for the preparation of bleached chemical pulp have traditionally been large consumers of chlorine as well as of soda lye in their external bleach plants. Soda lye is further used as sulphur-free make-up chemical. During the fifties and sixties the consumption of sodium hydroxide and chlorine was about the same in harmony with the production conditions of the chlorine-alkali plants.

In the seventies oxygen bleaching and chlorine dioxide began to replace chlorine in the bleach plants of the pulp mills which has meant a decreased use of elementary chlorine whereas the consumption of sodium hydroxide has increased.

In Sweden a further environmentally conditioned decrease of the use of chlorine for pulp bleaching is to be expected whereas new methods requiring still more sodium hydroxide (e.g. treatment of the pulp with nitrogen oxides prior to oxygen bleaching) are in the process of development.

The unbalance in chlorine and caustic use in the pulp industry for bleached chemical pulps is thus already a problem on certain markets and tends to become still greater in the future.

Traditionally sodium sulphate (salt cake, $Na_2SO_4$) is used as make-up chemical for the losses of sodium and sulphur resulting in the pulp manufacture. Alternatively, sodium hydroxide or any other sulphur-free sodium source as well as elementary sulphur or another sulphur-containing chemical can be used.

The present invention is based on the possibility to prepare alkali hydroxide by treatment of alkali sulphides with copper oxide. However, said sulphides do not appear as natural minerals but are often found in oxidized form as sulphates. In order to convert the sulphates to form which can be used by the process, they have to be reduced to the sulphide state. In the preparation of the sulphide-free alkali liquor according to the invention the problem arises, like in the chlorine-alkali electrolysis, as regards the production of by-products, in the present case copper sulphide and in the chlorine-alkali electrolysis elementary chlorine. Since it is desirable to be able to reuse the copper sulphide in the process according to the invention, said copper sulphide should be converted to copper oxide which can be effected in different ways. The sulphur content of the copper sulphide can then be removed, in a way known per se, as hydrogen sulphide, sulphur dioxide or elementary sulphur (Claus-process). It is of course of interest that the sulphur component is taken care of in a way that satisfies both the economy and the ecology. A preferred way to treat the copper sulphide is by roasting, the sulphide sulphur being converted to sulphur dioxide which either can be used directly or be further processed to sulphuric acid which is a great international bulk-chemical. Particularly suitable industry applications are those that can use the sulphide-free alkali liquor as well as the sulphur component. Such as industry branch is manufacture of bleached chemical kraft pulp.

In the pulp mill the sulphur is present as sulphide after the soda recovery unit. During the last years the discharge of sulphur ($SO_2$ to the air, sulphate to water) and sodium and potassium (to water) have decreased considerably owing to more severe environmental demands. This especially applies to Scandinavia but is expected to be applicable to large parts of the rest of the world within a near future. These environmental demands involve i.a. the introduction of so-called oxygen bleaching requiring the use of sulphide-free alkali liquor. In order to be able to use e.g. white liquor as an internal sulphide-free alkali liquor for oxygen bleaching and also for gas washing the sulphide content has to be eliminated.

To day the need for sulphide-free alkali liquor is met chiefly by oxidation of white liquor with oxygen from the air and/or by purchase of sodium hydroxide. Other alternative processes known today for the manufacture of sulphide-free alkali liquor is the so-called Tampella-process, cooling crystallization (green liquor), the STORA-process and the EBARA-process.

Mot of the processes mentioned require a causticizing step in order to provide the desired hydroxide solution, i.e. the primary product in the processes is a more or less pure sodium carbonate in solid or dissolved form. The causticizing can either be effected in conventional way by the addition of caustic lime (CaO) or by the addition of an amphoteric metal oxide, e.g. $Fe_2O_3$, and then burning and leaching (autocausticizing). In this context reference is made to US-A 4 000 264. Both processes comprise several process steps.

The Tampella-process comprises i.a. evaporation of the hydrogen sulphide by neutralization of a sulphide-containing alkali solution with flue gas ($CO_2$). The disadvantage of this method is that the desired end produkt, i.e. the hydroxide, is first eliminated and then generated at a later stage.

The cooling crystallization means that green liquor is cooled down to about 9°C, causing a major part of the sodium carbonate of the green liquor to precipitate as $Na_2CO_3 \cdot 10H_2O$. In addition to the need for causticizing in this process a further disadvantage is the energy losses resulting from the cooling.

The STORA-process (cf. Cederqvist, K.N. et al., TAPPI 43:8 (1960), 702-706) and the EBARA-process (cf. Teder A., Nordisk Cellulosa 1:2 (1984), 12) are two possible methods but are today considered as technically and economically unsuitable for the preparation of sulphide-free alkali liquor from liquors of sulphate pulp processes.

The present invention relates to a process for the preparation of an essentially sulphide-free alkali liquor starting from an alkali sulphide source by reacting in alkaline medium the alkali sulphide source with copper (II) oxide and/or copper (I) oxide, optionally with the addition of water, and allowing the mixture obtained to react to form hydroxide in an amount equivalent to the sulphide amount and to precipitate a solid phase which essentially consists of copper (I) sulphide, copper (II) sulphide or a mixture thereof, whereupon the solid phase is separated from the alkali liquor, the process being characterized in that the mole ratio oxide to sulphide (calculated as alkali sulphide) is from 1.00 to 1.10 and that the reaction time of the precipitation reaction is adjusted with regard to the mole ratio within a temperature range of 60-110°C so that the residual concentration of copper ions in the final alkali liquor is below 0.1 mmole/l.

According to US-A 2 054 727 it is known to prepare alkali liquor by treatment of alkali sulphide with zinc oxide to form zinc sulphide. However, the use of zinc oxide is associated with many disadvantages which strongly render the commercial application of the process difficult. We have found that the use of copper oxide unexpectedly and surprisingly eliminates said disadvantages and in this context we refer to the enclosed Comparative Examples. A summary of the unexpected advantages of copper oxide are the following:

a) When filtering and roasting the metal sulphide used the particle size principally should be as large as possible. Whereas precipitation with zinc oxide provides a submicronic average particle size of the sulphide precipitated, it has been found that the copper sulphide under the corresponding conditions has a considerably larger average particle size reaction times are as short as possible. The precipitation of copper sulphide at normal white liquor conditions has been shown to proceed faster than the precipitation of zinc sulphide (cf. Comparative Example 2).

b) In industrial processes it is of importance that the reaction times are as short as possible. The precipitation of copper sulphide at normal white liquor conditions has been shown to proceed faster than the precipitation of zinc sulphide (cf. Comparative Example 2).

c) The precipitation of copper sulphide is not as temperature sensitive as the precipitation of zinc sulphide (cf. Comparative Example 3).

d) Polysulphides in alkaline solutions can be eliminated with copper oxide but not with zinc oxide.

e) Precipitation with copper oxide provides a more easily practically controllable process. Undercharging of CuO results in the reaction solution becoming orange coloured; too large an overcharging results in the reaction solution becoming blue coloured. In the precipitation of ZnS the reaction solution does not change its colour, neither at undercharging nor at overcharging.

f) Copper oxide has lower solubility than zinc oxide at high hydroxide ion contents (cf. Comparative Example 4).

g) It is sometimes of importance to be able to eliminate the effects of the undesirable content of metal ions with complexing agents. It has been found that the most common complexing agents, e.g. DTPA (diethylene triamine pentaacetic acid) has a considerably greater affinity for the copper ion than for the zinc ion.

Further, it shall be noted that US-A 2 054 727 on page 2, the paragraph bridging the left and right columns, states as an advantage that one can use an excess of only 25%. Such a large excess of copper oxide would strongly restrict the practical applicability of the process according to the present invention.

From NO-C 101 658 and DE-OS-25 33 794 it is known that the sulphide in the liquor from cooking of cellulose can be separated by precipitation as iron sulphide. According to the patents either iron oxide or iron hydroxide is added for this purpose.

One requirement according to the present invention is that the metal sulphide obtained can be reused, if desired, upon roasting to oxide. We have studied in detail the oxide products obtained when roasting different metal sulphides and have then surprisingly found that only copper has shown to possess all properties making possible a practical use of the invention. Iron sulphide that has been roasted is present as $Fe_2O_3$, i.e. as a mixed oxide of Fe (II) and Fe (III) oxides. The degree of conversion of $Fe_2O_3$ to sulphide has, when tested by means of the process according to the invention, been shown to be very low, contrary to what is stated in the two patents.

Further, from NO-C 107 996 it is known that polysulphide can be prepared by the addition of copper (II) oxide to a sulphide-containing alkaline solution. In the patent a mole ratio $CuO/Na_2S$ of about 0.78 is then recommended.

According to the invention one can thus prepare an essentially sulphide-free alkali liquor. By "essentially sulphide-free" in this context is meant that the alkali liquor obtained contains less than 0.02 moles/l of hydrogen sulphide ions. As has already been mentioned above, "alkali liquor" means an aqueous solution of alkali hydroxide, preferably sodium hydroxide, the sodium hydroxide concentration being at least 1% by weight, e.g. 10-15 and upp to 50% by weight. By "alkaline medium" is meant a hydroxyl ion concentration of preferably at least 0.2 moles per liter.

By "alkali sulphide source" is meant alkali sulphide in aqueous solution, e.g. a sulphide-containing liquor, or in solid phase or as a melt. As alkali sulphide source one can thus use, in the process according to the invention sodium sulphide containing liquors e.g. from the pulp industry, especially from sulphate processes and principally white liquor and green liquor. However, the process according to the invention is not restricted to the pulp industry but is generally applicable to alkali sulphide containing liquors from the industry. The expression "alkali sulphide containing liquor" shall also be interpreted generally so that said expression also comprises alkali sulphide dissolved in its own crystal water.

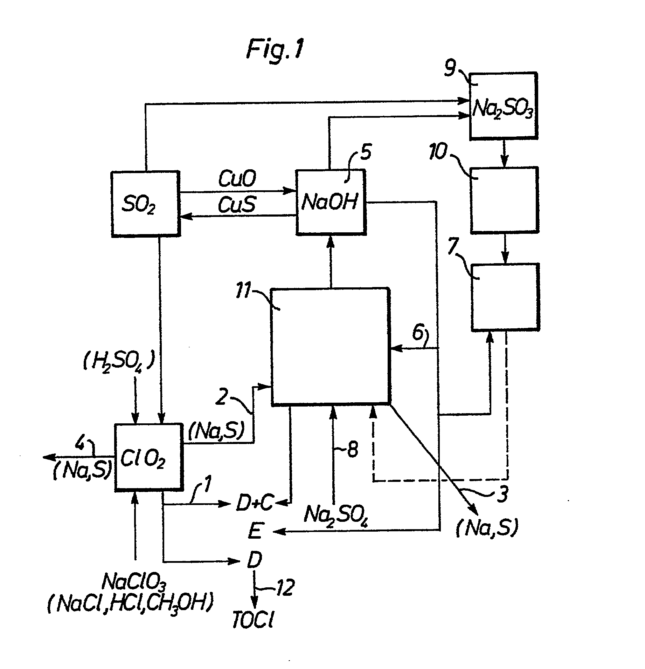

The advantages of the invention is that a pulp mill for the preparation of bleached chemical pulp in a simple way avoids to be dependent of the sodium and sulphur balance at the prevailing sulphidity. If the pulp mill (cf. fig. 1) wants to use a high proportion of chlorine dioxide (1) in its first bleaching step, this means that the amount of sodium and sulphur (2) as residual products in the chlorine dioxide generation far exceeds what is needed to cover the losses (3) in the mill. This often means that a great deal of so-called residual acid has to be dis charged to sewage disposal system (4) which is an economical loss and at the same time negative from an environmental point of view. With the above invention all residual products from the chlorine dioxide generation can be introduced into the chemical recovery system. The excess of sulphur then added can be withdrawn via the white liquor (5) according to the invention. The alkali liquor then obtained can either be used internally (6) and/or externally (7) dependent on the circumstances.

In order to increase the amounts of sulphur dioxide and sulphide-free alkali liquor according to the invention extra salt cake (8) can be added. This procedure can also be utilized to make sodium sulphite (9) for use in CTMP or other sulphiteneeding processes (10) that optionally can return waste liquors containing sulphur and sodium to the kraft recovery system (11).

White liquor having a sulphidity of 40% has a ratio OH-/HS- of 4:1. For the preparation of oxidized white liquor the following equation applies

$$8\ OH^- + 2\ HS^- + 2\ O_2\ (air) \rightleftharpoons 8\ OH^- + S_2O_3{}^{2-} + H_2O$$

In this condition the liquor is excellent for use for gas washing purposes. However, if it is used in oxygen bleaching (HC), our own investigations have shown that it is oxidized in varying degrees according to the following equation:

$$8\ OH^- + S_2O_3{}^{2-} + 2\ O_2\ (g) \rightleftharpoons 6\ OH^- + 2\ SO_4{}^{2-} + H_2O$$

This is to be compared with the claimed invention

$$8\ OH^- + 2\ HS^- + 2\ Cu_xO(s) \rightleftharpoons 10\ OH^- + 2\ Cu_xS(s)$$

where x=1 or x=2.

Thus, it is evident that the alkali liquor according to the invention increases the hydroxide concentration with the amount corresponding to the HS--content in spite of the already prevailing high alkalinity in contrast to the oxidized white liquor where the alkalinity of the HS--content is destroyed. To the invention this means further advantages such as lower ion strength in the oxygen bleaching plant owing to the absence of increased ballast in the form of thiosulphate and sulphate. Minor amounts of water are added which leads to lower evaporation costs. In principal, by a combination of chlorine dioxide process and bleaching sequence one can be quite self-supporting as regards bleaching chemicals including external alkali liquor prepared according to the invention.

Further, the sulphur as well as the copper in the copper sulphide may be reused upon roasting or according to other known technique.

High proportions of chlorine dioxide in the first bleaching step is one way to reduce the discharges of chlorinated organic substance from the bleaching plants (TOCl) (12), which is highly valuated from an environmental protection point of view.

As regards oxygen-bleached pulps the use of alkali liquor prepared according to the invention, even with a further addition of copper salts, has not shown any negative effects on the pulp quality.

The mole ratio between the copper oxide added and the sulphide shall be from 1.00 to 1.10. In certain cases it can be preferred to use overcharging since this results in a faster precipitation process.

The precipitation temperature is within the range from 60 to 110°C. The precipitation is particularly effected at a temperature of from 80 to 100°C and particularly at about 90°C.

The precipitation time selected is not especially critical but is adjusted dependent on the temperature and charging conditions used. A lower temperature and undercharging require a longer reaction time whereas, on the other hand, a higher temperature and overcharging require a shorter reaction time.

Normally the precipitation is completed within about from 10 to 40 minutes, typically already after 15 minutes. For instance, one can reach a 100 % precipitation at 90°C when using copper oxide at a charging somewhat above the stoichiometric ratio, i.e. just above 1.00.

The reaction pressure is not critical but the precipitation reaction can be effected at atmospheric pressure or at a pressure below or above atmospheric pressure.

The solid phase obtained in the precipitation consists essentially of copper sulphides and this phase is separated in a way known per se. This can be done by sedimentation, decantation, centrifugation, filtration, filter pressing etc.

The copper oxide used in the process according to the invention can, if desired, be reformed by roasting of the copper sulphide in a way known per se in an excess of air. Said roasting is usually carried out in fluidized bed, rotary owen or by flash roasting. The sulphur dioxide formed simultaneously with the copper oxide in the roasting can be used for chlorine dioxide generation and for the preparation of sulphide cooking liquors.

Other fields of use are chemicals preparation for sulphite cooking, CTMP-preparation etc. and of course sulphuric acid.

The sulphide precipitate obtained in the process according to the invention can upon separation from the mother liquor be washed with water whereby one on one hand achieves a reduction of the alkali losses and, on the other, obtains a purer precipitation for the subsequent roasting, if any, or other treatment. If then the washing water amount is kept within reasonable limits the washing water can be recirculated to the sulphide-containing liquor used as starting material without this liquor becoming too weak.

In the process according to the invention the reaction conditions shall be adjusted so that the residual concentration of copper ions in the final alkali liquor is below 0.1 mmol/l since such a content is normally not of negative importance for the pulping processes.

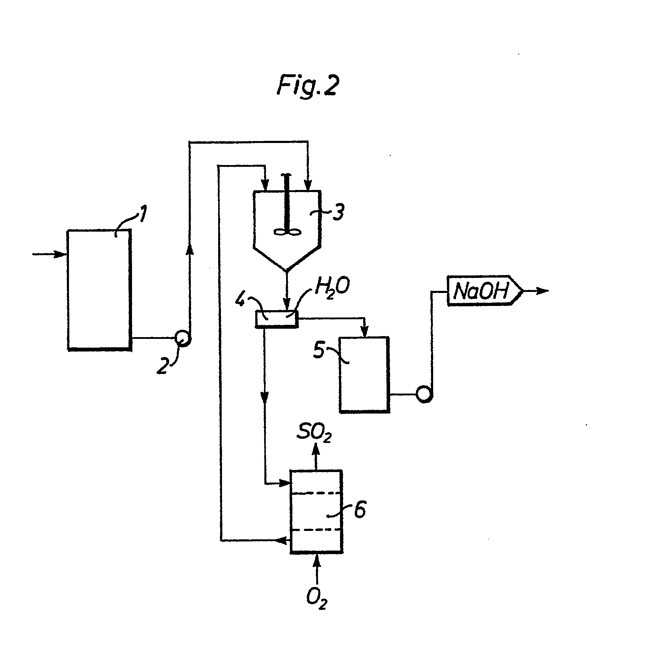

The process of the invention is now further elucidated with reference to Fig. 2 of the enclosed drawings which is a flow chart of an embodiment of the process of the invention for the preparation of a sulphide-free soda lye.

In fig. 2 the preparation of sulphide-free soda lay starting from a white liquor is illustrated. This white liquor is stored in the buffer tank 1. Via a pump 2 the white liquor is passed to the reaction tank/precipitation tank 3, in which also copper oxide from a roasting owen 6 is introduced. The precipitation process proceeds in the reaction tank/precipitation tank 3 under stirring and after the calculated reaction time the slurry from the reaction tank/precipitation tank 3 is fed to the separation unity 4 which can be a centrifuge, a filter or the like. The precipitate separated can be washed with water, if desired. The mother liquor obtained in the centrifugation or filtration is passed to the mother liquor tank 5 whereas the precipitate obtained in the separation unit 4 chiefly consisting of copper sulphide, is passed to the roasting owen 6 where the sulphide precipitate is roasted to oxide in an excess of air under the simultaneous formation of sulphur dioxide.

Finally, the sulphide-free sodium hydroxide solution obtained is passed to a storage tank.

The invention is also elucidated by the following Examples.

Example 1

Preparation of sulphide-free alkali liquor from white liquor at different chargings of CuO.

To a white liquor of the following composition: $[Na^+]$= 4.5 moles/l, $[OH-]$= 3.3 moles/l, $[HS-]$= 0.6 moles/l and $[CO_3{}^{2-}]$- 0.3 moles/l, copper (II) oxide was added in an amount corresponding to the mole ratios $CuO/Na_2S$ stated in Table I. The temperature of the white liquor was 90°C. At the prevailing reaction conditions the white liquor after a reaction time of about 1 hour contained the contents of sulphide and hydroxide stated in Table I in the solution upon separation of precipitated copper sulphide (by filtration in a glass filter G 4). The HS⁻ and OH⁻ contents in the solution were analysed according to SCAN-N 2:63, Svensk Papperstidning 66 (1963): 18, 727.

TABLE 1

White liquor at 90°C. The charging states the mole ratio $CuO/Na_2S$. The HS⁻ content of the white liquor was 0.6 moles/l prior to the addition of CuO.

| Charging | CuO added g/l | [HS⁻] moles/l | [OH⁻] moles/l |
|----------|---------------|---------------|---------------|
| 0.8 | 38 | 0.15 | 3.8 |
| 0.9 | 43 | 0.1 | 3.8 |
| 1.0 | 48 | 0.02 | 3.9 |
| 1.1 | 52 | <0.01 | 3.9 |
| 1.3 | 62 | <0.01 | 3.9 |

Example 2.

Preparation of sulphide-free alkali liquor starting from green liquor by the addition of CuO

To a green liquor of the following composition:$[Na^+]$ = 4.0 moles/l, $[OH^-]$= 1.2 moles/l, $[HS^-]$= 0.6 moles/l and$[CO_3{}^{2-}]$= 1.1 moles/l, there was added 48 g/l CuO (mole ratio $CuO/Na_2S$ = 1.0). At the same test conditions as in Example 1 less than 0.02 moles/l HS⁻ (analysed as in Example 1) remained in solution after a reaction time of about 1 hour and after separation of precipitated copper sulphide (in the same way as in Example 1).

## Example 3

Preparation of the sulphide-free alkali liquor starting from white liquor at different temperatures and a charging of CuO of 1.1.

To a white liquor of the same composition as in Example 1 there were added at different temperatures 52 g/l CuO (mole ratio CuO/Na₂S = 1.1). At the same test conditions as in Example 1 the white liquor after a reaction time of about 1 hour and after separation of precipitated copper sulphide (in the same way as in Example 1) showed the contents of HS⁻, OH⁻ and Cu (I,II) stated in Table II in solution (HS⁻ and OH⁻ analysed as in Example 1 and Cu (I, II) by atomic absorption spectrometry).

TABLE II

White liquor at different temperatures. The mole ratio CuO/Na₂S = 1.1. The content of HS⁻ in the white liquor was 0.6 moles/l before the addition of CuO.

| Temperature °C | Time, hours | [HS⁻] moles/l | [OH⁻] moles/l | [Cu (I, II)] mg/l tot. |
|---|---|---|---|---|
| 30 | 1 | 0.02 | 3.9 | 6.0 |
|  | 3 | <0.01 | 3.9 | 2.2 |
| 60 | 1 | <0.01 | 3.9 | 0.8 |
| 90 | 1 | <0.01 | 3.9 | 1.6 |

## Example 4

Preparation of sulphide-free alkali liquor starting from white liquor by the addition of Cu₂O

To a white liquor of the same composition as in Example 1 the amount of Cu₂O stated below in Table III was added at 90°C. At the prevailing test conditions the white liquor after a reaction time of about 15 minutes and after separation of precipitated copper sulphide (in the same way as in Example 1) contained the contents of HS⁻, OH⁻ and Cu (I, II) stated in Table III in solution (analysed as in Example 3).

TABLE III

White liquor at 90°C. The charging states the mole ratio Cu₂O/Na₂S. The HS⁻ content of the white liquor was 0.6 moles/l before the addition of Cu₂O.

| Charging | Cu₂O g/l | [HS⁻] moles/l | OH⁻] moles/l | [Cu (I, II)] mg/l tot. |
|---|---|---|---|---|
| 1.00 | 86 | <0.01 | 3.9 | 2 |

## Example 5

Preparation of sulphide-free alkali liquor from Na₂S.nH₂O

Finely divided Na₂S.nH₂O was mixed with CuO in amounts corresponding to a charging of 1.05 (mole ratio CuO/Na₂S) and at the temperatures stated in Table IV. In one case additional water has been added. After a reaction time of about 3 hours and separation of solid phase (filtration in sintered glass filter, G4) the solution contained the HS⁻ and OH⁻ contents stated in Table IV. Analysis according to Example 3.

TABLE IV

| Reaction temp., °C | n | Na$_2$S·nH$_2$O g/l | CuO g/l | Water ml | [OH$^-$] moles/l | [Cu (I, II)] mg/l tot. |
|---|---|---|---|---|---|---|
| 80 | 9.2 | 38 | 13 | 10 | 9.0 | 2 |
| 50 | 5.1 | 59 | 29 | 0 | 16.3 | 16 |

Below will follow four Comparative Examples showing the unexpected and surprising properties of using CuO compared to using ZnO.

Comparative Example 1

Larger particles of the precipitated metal sulphide

To white liquor copper oxide and zinc oxide, respectively, was added in a mole ratio metal oxide/Na$_2$S of 1.05. The temperature of the white liquor was 90°C. The reaction time was 5-300 minutes. The particle size of the metal sulphide precipitated was as follows:

| Metal sulphide | Average particle size, μm |
|---|---|
| CuS | 45 |
| ZnS | < 1 |

The larger particle size of the CuS greatly improves the possibility to separate the precipitate e.g. by filtration.

Comparative Example 2

Faster precipitation reaction with CuO

The reaction conditions were the same as in Comparative Example 1 but the charging (mole ratio) was 1.1. The following results were obtained:

| Metal sulphide | Precipitated amount of sulphide % | Reaction time, minutes |
|---|---|---|
| CuS | 98 | 5 |
| ZnS | 95 | 30 |

The faster reaction of CuO means a smaller reaction vessel.

Comparative Example 3

Less temperature dependency of the precipitation reaction for CuO

White liquor was used and the charging was 1.1.
The reaction rate when precipitating CuS(s) at 30°C is of about the same size of magnitude as for precipitating ZnS(s) at 90°C. The precipitation of CuS(s) is not quite as temperature dependent as the precipitation of ZnS(s), i.e. an unintentional cooling of the reaction solution makes a minor difference.

Comparative Example 4

Less solubility for copper at high hydroxide ion contents

Owing to the low solubility of copper oxide in alkaline solutions (as hydroxide complex) sulphide-free liquors of very high content of sodium hydroxide can be prepared without the metal content of the solution increasing appreciably. The following results were obtained at the follow reaction conditions: temperature 90°C, charging 1.05; reaction time 120 minutes; filtration on G4-filter.

| Metal oxide | Alkali content, % W of NaOH | $Me^{2+}$ tot, g/l |
|---|---|---|
| CuO | 30 | 0.6 |
| ZnO | 30 | 10.8 |

## Claims

1. A process for the preparation of an essentially sulphide-free alkali liquor starting from an alkali sulphide source by reacting in alkaline medium the alkali sulphide source with copper (II) oxide and/or copper (I) oxide, optionally with the addition of water, and allowing the mixture obtained to react to form hydroxide in an amount equivalent to the amount of sulphide and to precipitate a solid phase consisting essentially of copper (I) sulphide, copper (II) sulphide or a mixture thereof, whereupon the solid phase is separated from the alkali liquor, characterized in that the mole ratio oxide to sulphide (calculated as alkali sulphide) is from 1.00 to 1.10 and that the reaction time of the precipitation reaction is adjusted with regard to the mole ratio within a temperature range of 60–110°C so that the residual concentration of copper ions in the final alkali liquor is below 0.1 mmole/l.

2. A process according to claim 1, characterized by using sodium sulphids obtained from a process where sodium sulphate has been reduced, e.g. with carbon, to form sodium sulphide to which water has been added.

3. A process according to claim 1, characterized by using sodium sulphide containing liquors from industry, preferably from pulping industry, particularly from the sulphate process and especially then white liquor and green liquor.

4. A process according to any of claims 1–3, characterized in that the precipitation is effected at a temperature of from 80° to 100°C and particularly at about 90°C.

5. A process according to claim 3, characterised in that the sodium sulphide containing liquor used as starting material is white liquor, that the precipitation temperature is 90°C and that the mole ratio of copper oxide is about 1.05.

## Patentansprüche

1. Verfahren zur Herstellung einer im wesentlichen sulfidfreien Alkalilauge aus einer Alkalisulfidquelle, wobei man die Alkalisulfidquelle in alkalischem Medium mit Kupfer (II)oxid und/oder Kupfer(I)oxid gegebenenfalls durch Zugabe von Wasser umsetzt und das erhaltene Gemisch reagieren läßt, wobei sich Hydroxid in einer Menge bildet, die zur Sulfidmenge äquivalent ist und eine feste Phase ausfällt, die im wesentlichen aus Kupfer(I)sulfid, Kupfer(II)sulfid oder einem Gemisch davon besteht, und anschließend die feste Phase von der Alkalilauge trennt, dadurch gekennzeichnet, daß das Molverhältnis von Oxid zu Sulfid (berechnet als Alkalisulfid) 1.00 bis 1.10 ist und die Reaktionszeit der Fällungsreaktion dem Molverhältnis und der Temperatur im Bereich von 60–110 C angepaßt ist, so daß die in der fertigen Alkalilauge verbleibende Konzentration an Kupferionen weniger als 0,1 mMol/l beträgt.

2. Verfahren nach Anspruch 1, dadurch gekennzeichnet, daß Natriumsulfid verwendet wird, welches aus einem Verfahren gewonnen worden ist, bei dem Natriumsulfat z.B. mit Kohlenstoff zu Natriumsulfid reduziert worden ist, zu dem Wasser zugegeben worden ist.

3. Verfahren nach Anspruch 1, dadurch gekennzeichnet, daß natriumsulfidhaltige Laugen aus der Industrie, vorzugsweise der Zellstoffindustrie, insbesondere aus dem Sulfatverfahren, und dann vor allem weiße und grüne Lauge verwendet werden.

4. Verfahren nach einem der Ansprüche 1 bis 3, dadurch gekennzeichnet, daß die Fällung bei einer Temperatur von 80°C bis 100 C und insbesondere bei ca. 90°C durchgeführt wird.

5. Verfahren nach Anspruch 3, dadurch gekennzeichnet, daß die natriumsulfidhaltige Lauge, die als Ausgangsmaterial verwendet wird, weiße Lauge ist, daß die Fällungstemperatur 90°C beträgt und daß das Molverhältnis von Kupferoxid ca. 1.05 beträgt.

## Revendications

1. Procédé de préparation d'une liqueur alcaline essentiellement exempte de sulfure en partant d'une source contenant du sulfure alcalin, en faisant réagir dans un milieu alcalin la source de sulfure alcalin avec de l'oxyde de cuivre (II) et/ou de cuivre (I), éventuellement avec addition d'eau et en laissant réagir le mélange obtenu pour obtenir l'hydroxyde en quantité équivalente à la quantité de sulfure et pour précipiter une phase solide constituée essentiellement de sulfure de cuivre (I), de sulfure de cuivre (II) ou d'un mélange des deux, après quoi on sépare la phase solide de la liqueur alcaline, caractérisé en ce que le rapport molaire de l'oxyde au sulfure (calculé sous forme de sulfure alcalin) est compris entre 1,00 et 1,10 et qu'on règle le temps de réaction de la réaction de précipitation en fonction du rapport molaire dans un intervalle de température compris entre 60 et 110°C de sorte que la concentration résiduelle des ions cuivre dans la liqueur alcaline finale est inférieure à 0,1 mmole/l.

2. Procédé selon la revendication 1, caractérisé en ce qu'on utilise du sulfure de sodium obtenu par un procédé dans lequel le sulfate de sodium a été réduit, par exemple avec du carbone, pour donner du sulfure de sodium auquel on ajoute de l'eau.

3. Procédé selon la revendication 1, caractérisé en ce qu'on utilise des liqueurs industrielles comprenant du sulfure de sodium, de préférence dans l'industrie de la pâte à papier, en particulier à partir du procédé au sulfate et spécialement à partir de la liqueur blanche et de la liqueur verte.

4. Procédé selon l'une quelconque des revendications 1 à 3, caractérisé en ce qu'on réalise la précipitation à une température comprise entre 80° et 100°C et en particulier à environ 90°C.

5. Procédé selon la revendication 3, caractérisé en ce que la liqueur comprenant le sulfure de sodium utilisée comme matériau de départ est la liqueur blanche, que la température de précipitation est 90°C et que le rapport molaire de l'oxyde de cuivre est voisine de 1,05.

## Fig.1

# Fig.2